Europäisches Patentamt

European Patent Office

Office européen des brevets

(19)

(11) Publication number : **0 280 890 B1**

# (12) EUROPEAN PATENT SPECIFICATION

(45) Date of publication of patent specification :
**04.01.95 Bulletin 95/01**

(51) Int. Cl.$^6$ : **G06F 9/46,** G06F 9/38

(21) Application number : **88101433.6**

(22) Date of filing : **02.02.88**

(54) **System and method for detecting the execution of an instruction in a central processing unit.**

(30) Priority : **04.02.87 JP 24223/87**

(43) Date of publication of application :
**07.09.88 Bulletin 88/36**

(45) Publication of the grant of the patent :
**04.01.95 Bulletin 95/01**

(84) Designated Contracting States :
**DE GB**

(56) References cited :
**EP-A- 0 168 034
EP-A- 0 211 384
DE-A- 3 316 681
PATENT ABSTRACTS OF JAPAN, vol. 7, no. 51
(P-179)[1196], 26th February 1983; & JP-A-57
199 052 (MITSUBISHI DENKI K.K) 06-12-1982**

(73) Proprietor : **SHARP KABUSHIKI KAISHA
22-22 Nagaike-cho
Abeno-ku
Osaka 545 (JP)**

(72) Inventor : **Hashimoto, Sadakatsu
Nara Parku Haitsu 504
54-3, Oomori-cho
Nara-shi Nara-ken (JP)**

(74) Representative : **Selting, Günther, Dipl.-Ing. et
al
Patentanwälte
von Kreisler, Selting, Werner
Postfach 10 22 41
D-50462 Köln (DE)**

## Description

The present invention generally relates to a detecting system of an execution instruction for a central processing unit in a computer system, and more particularly, to a detecting system of a central processing unit execution instruction capable of realizing detection of a specific instruction even for a central processing unit fully adopting a pipelined construction.

A data processing device for generating an interruption and arbitrary instruction is disclosed in Patent Abstracts of Japan, Vol. 7, No. 51 (P-179) /1196/, 26th February 1983; & JP-A-57 199 052. According to the known system, an address of the instruction executed next from the processor is outputted to a first bus and the content of the address of a main memory is outputted to a second data bus. The processor outputs an instruction fetch signal and reads the content of the data bus and the instruction is executed. The known system comprises an instruction register for storing the content of the bus in sychronizing with the instruction fetch signal. An instruction decode table decides whether an interruption is generated after the execution of the instruction or not.

Computer systems are provided with hardware and software constructions inherent in respective models, and programs to be executed thereon are generally specific programs exclusive to the particular model, and can not be applied to other models for use.

In the case where the application program exclusive to a certain specific system as stated above is to be used in a different system, if it is arranged to access the hardware structure only through means of the software referred to as "system call", it has been known that emulation is possible through detection of the system call, and such practice is also actually effected up to the present. However, in the case where the application program is adapted to directly access the hardware by input/output instruction, etc., it becomes necessary to detect the execution of the instruction.

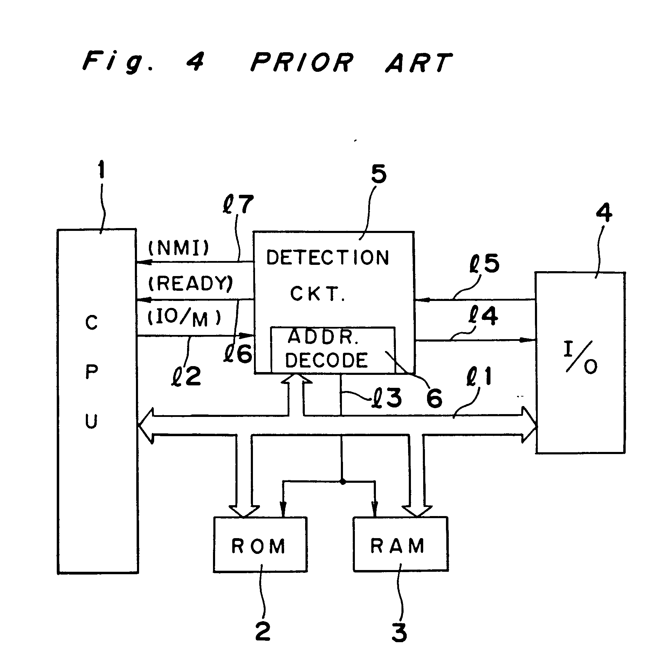

Referring to Fig. 4 showing a block diagram of a known hardware construction, the concept in a prior art system will be explained hereinbelow with reference to a representative 16 bit central processing unit i8086 (a model name used in trade and manufactured by Intel Co., Japan) as one example.

In the arrangement of Fig. 4, a central processing unit 1, a read-only memory (ROM) 2, a random access memory (RAM) 3, an input/output port 4, and a detecting circuit 5 are connected to each other by a system bus $\ell$1. The detection circuit 5 is provided to detect the execution instruction of the central processing unit 1, and includes an address decoder 6 therein.

In the case where the central processing unit 1 is to access an outer or external device, whether the object to be dealt with is of a memory unit or input/output device (not shown) is fudged at the detection circuit 5 by an IO/M signal which is an identification signal outputted through a line $\ell$2. In the case of memory access, the read only memory 2 or random access memory 3 is accessed through a line $\ell$3, while, when the input/output device is to be accessed, the input/output port 4 is accessed through a line $\ell$4.

The address information necessary for the above access is applied to the address decoder 6 within the detection circuit 5 through the system bus $\ell$1. The address decoder 6 generates an address latch enable signal (referred to as an ALE signal hereinafter), and decodes the content thereof as latched by the ALE signal, thereby to decode the address information corresponding to the object to be accessed by the central processing unit 1, and to access the specific external device.

At this time, in the access of address space for the input/output port 4, if a ready signal (referred to as READY signal hereinafter) is returned through a passage line $\ell$5 → detection circuit 5 → line $\ell$6, to the central processing unit 1, without actually carrying out the access to the input/output device (not shown), the central processing unit 1 proceeds to the subsequent function based on a judgement that the above access to said input/output device has been effected. Such a processing step is referred to as an NMI processing step. In this case, at the starting of the input/output bus cycle, when the detection circuit 5 generates a non-maskable interrupt (referred to as NMI hereinafter) request signal, and applies the NMI signal to the central processing unit 1 through a line $\ell$7, said central processing unit 1 transfers the control processing to the above NMI processing step before executing the subsequent instruction.

Accordingly, in the NMI processing step, if the content of the instruction prior to the address at which the NMI signal is generated is checked, the kind of the instruction and the number of the address accessed can be found. The detecting system of the central processing unit execution instruction by outputting the NMI signal through bus cycle for interruption may be effective not only for the central processing unit model i8086 as described above, but also for other central processing units such as a typical 8 bit central processing unit model Z80 (a model name used in trade and manufactured by Zilog Inc., Japan) and the like.

However, the conventional detecting system of the central processing unit execution instruction as described so far can not be applied to a central processing unit, e.g., Intel model i80286 (a model name used in trade and manufactured by Intel Co., Japan) in which processing blocks are largely formed into pipelines. Although

EP 0 280 890 B1

the model i8086 referred to earlier is also formed into the pipelines in its interior, the degree of such pipeline formation is not so high as in the model i80286, and therefore, outputting of the NMI signal at the starting of the bus cycle may serve the purpose, if the instruction is limited only to the input/output instructions. However, in the central processing unit such as the model i80286 which is highly formed into pipelines, even when the interruption is applied by outputting the NMI signal through the bus cycle, processing at several steps forward has already been effected at the time point when the interruption was received, thus making it impossible to detect the instruction in object. In other words, there has been such a problem that the address having the input/output instructions can not be found in the NMI processing step.

It is the object of the present invention to provide a detecting system of a central processing unit execution instruction, which is capable of detecting a specific instruction to be executed even in a highly pipelined central processing unit.

The object is solved, according to the invention, with the features of claim 1.

According to the present invention, there is provided a detecting system of an execution instruction for a central processing unit, which includes a signal generating circuit for generating a non-maskable interruption request signal by detecting that the central processing unit has fetched a specific instruction, a signal state memory circuit for memorizing whether or not said interruption request signal was generated when said specific instruction was executed, and a nullifying circuit for nullifying the execution of said specific instruction. The detecting system is arranged to detect the state where the central processing unit has executed the specific instruction, and also, to detect the instruction about to be executed by the central processing unit.

By the arrangement according to the present invention as described above, the state where the central processing unit has executed the specific instruction, and also, the instruction about to be executed by the central processing unit may be detected, and the function following the content of the instruction is emulated. The detecting system is simple in construction and accurate in functioning, and can be readily manufactured at low cost.

These and other objects and features of the present invention will become apparent from the following description taken in conjunction with the preferred embodiment thereof with reference to the accompanying drawings, in which:

Fig. 1 is a block diagram showing a general construction of hardware according to one preferred embodiment of the present invention;

Fig. 2 is a circuit diagram showing electrical construction of the hardware of Fig. 1;

Fig. 3 is a flow-chart for explaining functions of the embodiment of Fig. 1; and

Fig. 4 is a block diagram showing construction of conventional hardware (already referred to).

Before the description of the present invention proceeds, it is to be noted that like parts are designated by like reference numerals throughout the accompanying drawings.

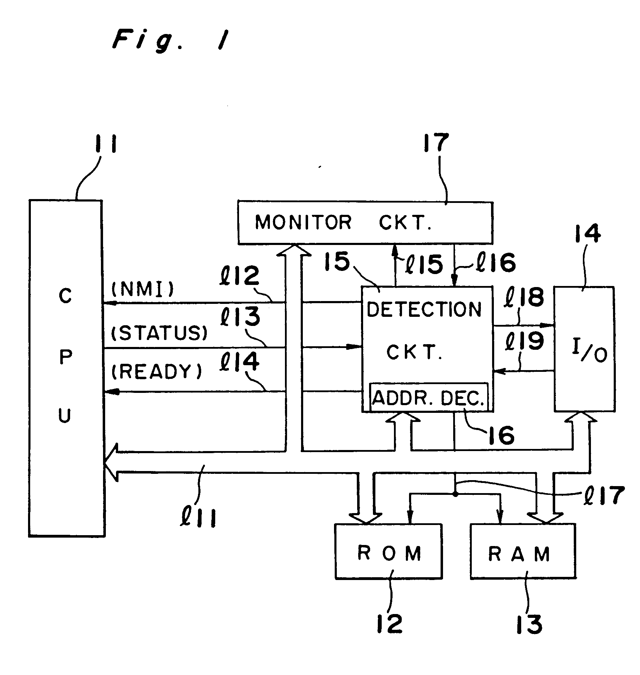

Referring now to the drawings, there is shown in Fig. 1 a block diagram representing a hardware construction for realizing a detecting system of a central processing unit execution instruction according to one preferred embodiment of the present invention. The detecting system in Fig. 1 generally includes a central processing unit 11, a monitor circuit 17 for detecting that the central processing unit has taken in or fetched (referred to as "fetch" hereinafter) a specific instruction, a detection circuit 15 which is incorporated with a circuit for generating a NMI signal through detection of the above fetching, a circuit for memorizing whether or not said NMI signal was generated when said specific instruction is effected, and a nullifying circuit for nullifying the execution of said specific instruction, a read only memory 12, a random access memory 13, and an external device such as an input/output port 14 and the like. The detection circuit 15 includes an address decoder 16 incorporated therein, and all of the circuits as described so far are connected to each other by a system bus $\ell 11$ as shown.

The embodiment of the present invention in Fig. 1 is characterized in that there is provided the monitor circuit 17 for detecting that the specific execution instruction of a highly pipelined central processing unit, for example, a processing unit of the model i80286 referred to earlier, has been fetched.

Between the central processing unit 11 and the detection circuit 15, there are connected lines $\ell 12$, $\ell 13$ and $\ell 14$, besides the system bus $\ell 11$. The line $\ell 12$ is intended to transmit the NMI signal from the detection circuit 15 to the central processing unit 11, and the line $\ell 13$ is to transmit the status signal from the central processing unit 11 to the detection circuit 15, while the line $\ell 14$ is intended to transmit the ready signal from the detection circuit 15 to the central processing unit 11.

The status signal contains therein various control information such as the IO/M signal, instruction fetch signal, memory read/write (read/write) signal, etc., and is decoded for its content by the detection circuit 15. The instruction fetch signal is applied to the monitor circuit 17 through the line $\ell 15$, while the IO/M signal is inputted to the IO port 14 through the line $\ell 18$.

The output of the monitor circuit 17 is applied to the detection circuit 15 through a line $\ell 16$. Meanwhile,

3

from the detection circuit 15, a memory select signal is applied to the read only memory 12 and random access memory 13 through a line $\ell$17, and a device selection signal is applied to the input/output port 14 via the line $\ell$18, and further, from the input/output port 14, an input/output READY signal is applied back to the detection circuit 15 through a line $\ell$19.

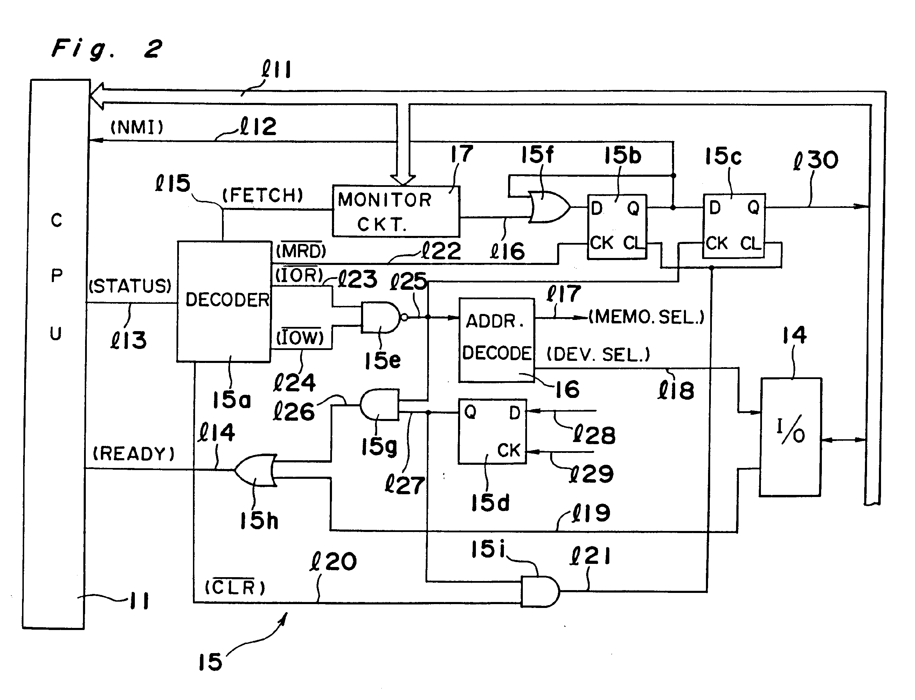

Reference is also made to Fig. 2 showing an electrical construction of one embodiment according to the present invention. In Fig. 2, the portions excluding the central processing unit 11, monitor circuit 17 and input/output port 14 constitute the detection circuit 15, and include the address decoder 16.

In the arrangement of Fig. 2, it is assumed that the central processing unit 11 is, for example, of the model i80286 which is a highly pipelined central processing unit, and that the monitor circuit 17 is adapted to monitor the input/output instruction of the central processing unit 11. The codes for the input/output instruction of the central processing unit 11 to be applied to the monitor circuit 17 through the information bus $\ell$11 are classified, for example, into eight kind as shown in Table 1 below, and are of 1 byte or 2 byte instruction.

## Table 1

| Input instruction | E4H, ECH, E5H, EDH |
|---|---|
| Output instruction | E6H, E7H, EEH, EFH |

The status signal outputted from the central processing unit 11 through the line $\ell$13 is decoded by a decoder 15a, and an instruction fetch signal derived from the line $\ell$15 is applied to the monitor circuit 17. Moreover, there are individually derived a memory read signal (referred to as $\overline{\text{MRD}}$ signal hereinafter) through a line $\ell$22, an outer read signal (referred to as $\overline{\text{IOR}}$ signal hereinafter) through a line $\ell$23, and an outer write signal (referred to as $\overline{\text{IOW}}$ signal hereinafter) through a line $\ell$24.

The monitor circuit 17 decodes the kind of the bus cycle to be currently effected by the instruction fetch signal.

The $\overline{\text{MRD}}$ signal is the signal to become active when the central processing unit 11 reads the memory, and is prepared in the decoder 15a based on the result of decoding of the status signal. When this memory access is effected, the output line $\ell$12 of a first flip-flop circuit 15b to be described later is subjected to a level change from "L" to "H", and such level change is applied to the central processing unit 11 as the NMI signal.

The $\overline{\text{IOR}}$ signal is the signal to become active when the central processing unit 11 reads the information related to an input/output device (not shown), while the $\overline{\text{IOW}}$ signal is the signal to be active when the above information is written in, both being prepared based on the result of reading of the above status signal in the decoder 15a. When the access of such input/output devices is effected, the output in a line $\ell$30 of a second flip-flop circuit 15c is subjected to the level change from "L" to "H", and this level change is applied through the system bus $\ell$11 to the central processing unit 11, which judges that the input/output access has been effected by reading this level change.

Still referring to Figs. 1 and 2, functioning of the present embodiment described so far will be explained hereinbelow.

Here, it is assumed that the first and second flip-flop circuits 15b and 15c are both cleared, and output levels derived into the line $\ell$12 through which the NMI signal is transmitted, and the line $\ell$30 for detecting whether or not the above input/output access is effected, are both "L", and that a third flip-flop circuit 15d which is to be set or reset by the access of the central processing unit 11 through the lines $\ell$28 and $\ell$29 is in the set state, with the level of its output line $\ell$27 being "H".

The decoder 15a reads the status signal derived onto the line $\ell$13, and upon recognition of the fetch cycle, applies the instruction fetch signal to the monitor circuit 17 through the line $\ell$15. The monitor circuit 17 recognizes the specific instruction code such as the input/output instruction by monitoring the information derived onto the information bus $\ell$11. The monitor circuit 17 derives "H" level onto the line $\ell$16 when the above two kinds of information are true, i.e., when the instruction fetch signal and the instruction code are inputted for application to an information input terminal of the first flip-flop circuit 15b through a CR gate 15f.

On the other hand, at a timing when the $\overline{\text{MRD}}$ signal is changed from "L" to "H" level, i.e., at the time point when the central processing unit 11 has effected the memory reading, the above $\overline{\text{MRD}}$ signal is applied to the clock input terminal of the first flip-flop circuit 15b, whereby the output line $\ell$12 of the first flip-flop circuit 15b is subjected to the level change from "L" to "H". This level change from "L" to "H" is applied to the central processing unit 11 as the NMI signal, at which time point, the specific instruction (e.g., the input/output instruction in the present embodiment) is to be fetched. It is to be noted here that the above NMI signal is retained until

4

the first flip-flop circuit 15b is cleared.

Furthermore, at this time, the state of the second flip-flop circuit 15c, i.e., the level of the line $\ell 30$ remains unchanged, staying at "L". Upon input of the above NMI signal, the central processing unit 11 transfers the control function to the interruption processing step after completion of the instruction being executed at that time, but normally, since unprocessed memory or access request of the input/output device remain in a bus interface unit (BIU) in the central processing unit, the actual transfer of the control function is effected after all of the above access request has been completed.

At this time, when the input/output access is effected, a line $\ell 25$ is subjected to the level change from "L" to "H" through a NAND gate 15e by the $\overline{\text{IOR}}$ signal or $\overline{\text{IOW}}$ signal, and therefore, the second flip-flop circuit 15c is reset, with the output of "H" level being applied to the line $\ell 30$. If the input/output access is not produced, the second flip-flop circuit 15c reamins cleared and "L" level is maintained on the line $\ell 30$. By reading such "L" or "H" level of the line $\ell 30$ by the central processing unit 11 through the information bus $\ell 11$, it is judged whether or not the input/output access has been effected.

The flip-flop circuits 15c and 15d are connected to the line $\ell 14$ through gates 15g and 15h via a line $\ell 26$, while the clear terminals CL of the flip-flop circuits 15b and 15c are coupled with the third flip-flop circuit 15d and the decoder 15a through a line $\ell 21$, a gate 15i and a line $\ell 20$ as shown.

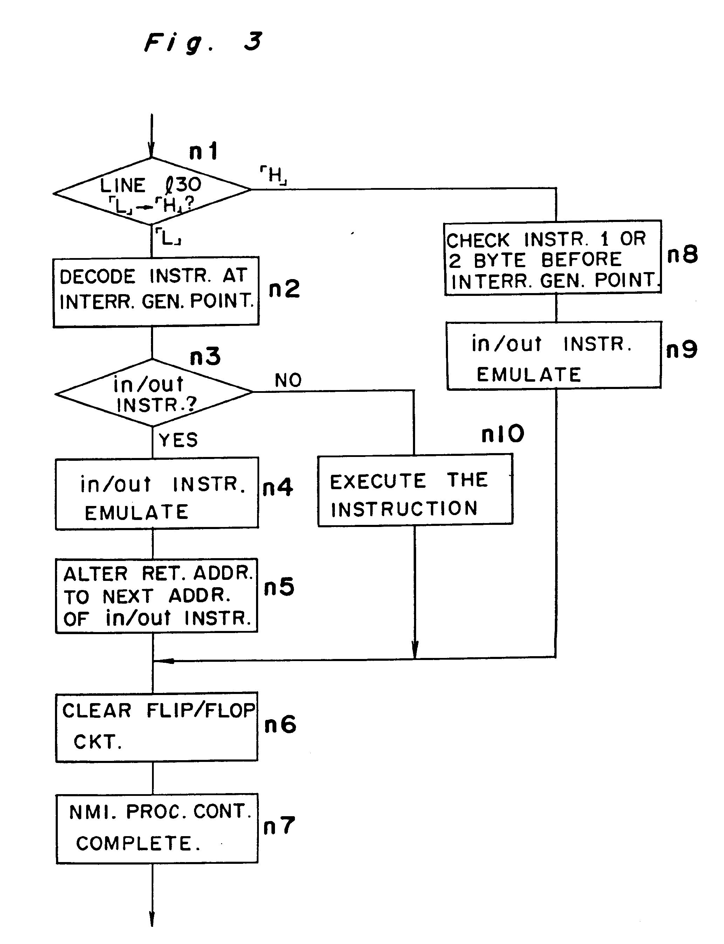

Reference is also made to a flow-chart of Fig. 3 for explaining the functions of the embodiment as described so far.

At step n1. the level of the line $\ell 30$ is read by the central processing unit 11 for judgement of presence or absence of the input/output access. If the above level is of "L", the input/output access is not effected, and therefore, the procedure proceeds to step n2. Although the NMI signal is generated by the fetch of the input/output instruction as described earlier, it was also produced by the fetch of an operand in the actual case, and therefore, in order to study the content of the instruction at the interruption generating point, instruction at such interruption generating point is read at step n2, while at step n3, judgement is made at step n3, as to whether or not the instruction is of the input/output instruction. If it is of the input/output instruction, its executing function is emulated at step n4.

At step n5, the return address after the emulation is altered to the next address of the input/output instruction, and the procedure proceeds to step n6 so as to clear the first and second flip-flop circuits 15b and 15c, and at step n7, the NMI processing control is completed, thereby to return to the state before the interruption.

At step n3, if it is judged that the instruction is other than the input/output instruction, the procedure is transferred to step n10 to execute the instruction, and upon completion, the procedure proceeds to step n6 so as to clear the first and second flip-flop circuits 15b and 15c. At step n7, the NMI processing control is terminated so as to return to the state before the interruption.

In the case where the level of the line $\ell 30$ is "H" at step n1, the procedure is transferred to step n8. Here, the fact that the level of the line $\ell 30$ is of "H" shows that the input and output access was effected in the period from the generation of the NMI signal to the transfer in the interruption processing step. In this case, since it is ensured that the instruction before the interruption generating point is of the input/output instruction of 1 to 2 bytes as shown in Table 1 referred to earlier, at step n8, the kind of the instruction before the interruption generating point by 1 byte or 2 bytes is checked, and at step n9, the function equivalent to the instruction is emulated. Thereafter, the procedure proceeds to step n6, where the first and second flip-flop circuits 15b and 15c are cleared. At step n7, the NMI processing control is completed so as to return to the state prior to the interruption.

It is to be noted here that in the foregoing embodiment, although step n8 is provided so as to judge the signal fetch of the operand code contained in the status signal to be outputted from the central processing unit 11, the arrangement may be so modified as to separate the operand code from the state signal inputted to the detection circuit 15 for input only of the instruction code, whereby the generation of the NMI signal by the operand code is eliminated for a marked improvement of the processing speed.

It is also to be noted that, in the foregoing embodiment, although the model i80286 is taken as an example for the central processing unit 11, the concept of the present invention is not limited in its application to this model alone, but may readily be applied to other central processing units as well, and that, although the input/output instruction is taken as an example for the instruction, the detecting function as described may be realized with respect to other instruction.

As is clear from the foregoing description, the detecting system of execution instruction for a central processing unit of the present invention is arranged to detect the state where the central processing unit has executed the specific instruction, and also, to detect the instruction about to be executed by the central processing unit so as to emulate the function following the content of the instruction, whereby the execution instruction of a highly pipelined central processing unit may be detected, and particularly, by detecting the input/output instruction, it becomes possible to execute programs prepared for a system of a different hardware construction.

EP 0 280 890 B1

## Claims

1. A system for detecting an execution instruction, comprising:

central processing means (11) for developing a status signal indicative of when a specific execution instruction is fetched by said central processing means, said central processing means (11) being a highly pipelined unit, and

detection means, operatively communicative with said central processing means, for detecting the specific execution instruction fetched by said central processing means,

**characterized in that**

said detection means comprises:

signal generating means (15b,15f,17) operatively communicative with said central processing means, for developing a non-maskable interruption request signal NMI in response to the status signal indicating that said central processing means has fetched the specific execution instruction,

signal state memory means (15c), operatively communicative with said signal generating means, for indicating whether or not said specific execution instruction has been effected before the start of the NMI routine, and nullifying means (15g,15i), operatively communicative with said signal generating means, for nullifying the specific execution instruction by returning a bus cycle termination signal to the central processing means without actually carrying out the specific execution instruction,

wherein said detection means detects the address of the specific execution instruction based on the output of said signal state memory means so that the function following the content of the specific execution instruction can be emulated.

2. A system as claimed in claim 1, wherein said signal generating means comprises monitor means (17) for detecting when said central processing means (11) has fetched the execution instruction.

3. A system as claimed in claim 2, wherein said signal generating means further comprises an OR device (15f), and a flip-flop device (15b).

4. A system as claimed in one of claims 1 to 3, wherein said signal generating means, said central processing means (11), and said signal state memory means operatively communicate by a system bus (111).

5. A system as claimed in one of claims 1 to 4, wherein said central processing means comprises an Intel i80286 microprocessor chip.

6. A system as claimed in one of claims 1 to 5, wherein said signal state memory means comprises a flip-flop device (15c).

7. A system as claimed in one of claims 1 to 6, wherein said nullifying means comprises first and second AND devices (15g,15i).

8. A system as claimed in one of claims 1 to 7, further comprising state retaining means for indicating that the execution instruction has been produced based on the supply of said non-maskable interruption request signal (NMI) outputted from said central processing means (11) by the execution instruction so that the content of said specific instruction is emulated according to the contents of the execution instruction.

9. A method for detecting an execution instruction in a system by developing a status signal from central processing means (11) indicative of whether a specific execution instruction is fetched by said central processing means, characterized by the steps of:

developing a non-maskable interruption request signal (NMI) in response to said status signal indicating that said central processing means has fetched the specific execution instruction,

indicating whether or not said specific execution instruction has been effected before the start of the NMI routine, and

nullifying the specific execution instruction responsive to the execution instruction being fetched by said central processing means by returning a bus cycle termination signal to the central processing means without actually carrying out the specific execution instruction,

wherein the method detects the address of the specific execution instruction based on the output of said signal state memory means so that the function following the content of the specific execution instruction can be emulated.

6

10. A method as claimed in claim 9, further comprising the step of indicating that the execution instruction has been produced based on the supply of said non-maskable interruption signal (NMI) outputted from said central processing means (11) by the execution instruction so that the content of said specific instruction is emulated according to the contents of the execution instruction.

**Patentansprüche**

1. System zum Erkennen eines Ausführungsbefehls, mit:

   einer Zentralverarbeitungseinrichtung (11) zur Entwicklung eines Statussignals, welches angibt, wann ein bestimmter Ausführungsbefehl von der Zentralverarbeitungseinrichtung abgerufen wird, wobei die Zentralverarbeitungseinrichtung (11) aus einer Einheit mit hoher Pipelinestruktur besteht, und

   einer operativ mit der Zentralverarbeitungseinrichtung kommunizierenden Detektoreinrichtung zum Erkennen des von der Zentralverarbeitungseinrichtung abgerufenen bestimmten Ausführungsbefehls,

   **dadurch gekennzeichnet, daß**

   die Detektoreinrichtung aufweist:

   eine operativ mit der Zentralverarbeitungseinrichtung kommunizierende Signalerzeugungseinrichtung (15b,15f,17) zur Entwicklung eines nicht maskierbaren Unterbrechungsanforderungssignals NMI auf das Statussignal hin, welches angibt, daß die Zentralverarbeitungseinrichtung den bestimmten Ausführungsbefehl abgerufen hat,

   eine operativ mit der Signalerzeugungseinrichtung kommunizierende Signalzustandsspeichereinrichtung (15c) zum Angeben, ob der bestimmte Ausführungsbefehl vor dem Start der NMI-Routine durchgeführt worden ist oder nicht, und

   eine operativ mit der Signalerzeugungseinrichtung kommunizierende Annulliereinrichtung (15g,15i) zum Annullieren des bestimmten Ausführungsbefehls durch Rücksendung eines Buszyklusabschlußsignals zu der Zentralverarbeitungseinrichtung, ohne daß der bestimmten Ausführungsbefehl tatsächlich ausgeführt wird,

   wobei die Detektoreinrichtung die Adresse des bestimmten Ausführungsbefehls auf der Basis des Ausgangssignals der Signalzustandsspeichereinrichtung erkennt, so daß die dem Inhalt des bestimmten Ausführungsbefehls folgende Funktion emuliert werden kann.

2. System nach Anspruch 1, bei dem die Signalerzeugungseinrichtung eine Überwachungseinrichtung (17) aufweist, um zu erkennen, wann die Zentralverarbeitungseinrichtung (11) den Ausführungsbefehl abgerufen hat.

3. System nach Anspruch 2, bei dem die Signalerzeugungseinrichtung ferner eine ODER-Vorrichtung (15f) und eine Flip-Flop-Vorrichtung (15b) aufweist.

4. System nach einem der Ansprüche 1 bis 3, bei dem die Signalerzeugungseinrichtung, die Zentralverarbeitungseinrichtung (11) und die Signalzustandsspeichereinrichtung durch einen Systembus (111) operativ miteinander kommunizieren.

5. System nach einem der Ansprüche 1 bis 4, bei dem die Zentralverarbeitungseinrichtung einen Mikroprozessorchip Intel i80286 aufweist.

6. System nach einem der Ansprüche 1 bis 5, bei dem die Signalzustandsspeichereinrichtung eine Flip-Flop-Vorrichtung (15c) aufweist.

7. System nach einem der Ansprüche 1 bis 6, bei dem die Annulliereinrichtung erste und zweite UND-Vorrichtungen (15g,15i) aufweist.

8. System nach einem der Ansprüche 1 bis 7, ferner mit einer Zustandshalteeinrichtung zum Angeben, daß der Ausführungsbefehl anhand der Zufuhr des durch den Ausführungsbefehl von der Zentralverarbeitungseinrichtung ausgegebenen nicht maskierbaren Unterbrechungsanforderungssignals (NMI) erzeugt worden ist, so daß der Inhalt des bestimmten Befehls entsprechend dem Inhalt des Ausführungsbefehls emuliert wird.

9. Verfahren zum Erkennen eines Ausführungsbefehls in einem System durch Entwicklung eines Statussignals- von einer Zentralverarbeitungseinrichtung (11), das angibt, ob ein bestimmer Ausführungsbefehl von der Zentralverarbeitungseinrichtung abgerufen wird, gekennzeichnet durch die folgenden Schritte:

Entwickeln eines nicht maskierbaren Unterbrechungsanforderungssignals (NMI) auf das Statussignal hin, welches angibt, daß die Zentralverarbeitungseinrichtung den bestimmten Ausführungsbefehl abgerufen hat,

Angeben, ob der bestimmte Ausführungsbefehl vor dem Start der NMI-Routine ausgeführt worden ist oder nicht, und

Annullieren des bestimmten Ausführungsbefehls auf den von der Zentralverarbeitungseinrichtung abgerufenen Ausführungsbefehl hin durch Rücksendung eines Buszyklusabschlußsignals zu der Zentralverarbeitungseinrichtung, ohne daß der bestimmte Ausführungsbefehl tatsächlich ausgeführt wird, wobei das Verfahren die Adresse des bestimmten Ausführungsbefehls auf der Basis des Ausgangssignals der Signalzustandsspeichereinrichtung erkennt, so daß die dem Inhalt des bestimmten Ausführungsbefehls folgende Funktion emuliert werden kann.

10. Verfahren nach Anspruch 9, ferner mit dem Schritt des Angebens, daß der Ausführungsbefehl anhand der Zufuhr des durch den Ausführungsbefehl von der Zentralverarbeitungseinrichtung (11) ausgegebenen nicht maskierbaren Unterbrechungsanforderungssignals (NMI) erzeugt worden ist, so daß der Inhalt des bestimmten Befehls entsprechend dem Inhalt des Ausführungsbefehls emuliert wird.

## Revendications

1. Système pour détecter une instruction d'exécution, comprenant:

des moyens de traitement centraux (11) pour engendrer un signal d'état indicateur de l'instant où une instruction d'exécution spécifique est prise en charge par lesdits moyens de traitement centraux, lesdits moyens de traitement centraux (11) étant constitués par une unité à fort chevauchement, et

des moyens de détection, communiquant fonctionnellement avec lesdits moyens de traitement centraux, pour détecter l'instruction d'exécution spécifique prise en charge par lesdits moyens de traitement centraux,

caractérisé en ce que

lesdits moyens de détection comprennent:

des moyens générateurs de signaux (15b, 15f, 17) communiquant fonctionnellement avec lesdits moyens de traitement centraux, pour engendrer un signal de demande d'interruption non invalidable NMI en réponse au signal d'état, indiquant que lesdits moyens de traitement centraux ont pris en charge l'instruction d'exécution spécifique,

des moyens de mémorisation d'état de signal (15c), communiquant fonctionnellement avec lesdits moyens générateurs de signaux, pour indiquer si ladite instruction d'exécution spécifique a été ou non réalisée avant le lancement du sous-programme NMI, et

des moyens d'annulation (15g, 15i), communiquant fonctionnellement avec lesdits moyens générateurs de signaux, pour annuler l'instruction d'exécution spécifique en renvoyant un signal de terminaison de cycle de bus sur les moyens de traitement centraux, sans exécuter réellement l'instruction d'exécution spécifique,

dans lequel lesdits moyens de détection détectent l'adresse de l'instruction d'exécution spécifique en se fondant sur la sortie desdits moyens de mémorisation d'état de signal, afin que la fonction suivant le contenu de l'instruction d'exécution spécifique puisse être émulée.

2. Système tel que défini dans la revendication 1, dans lequel lesdits moyens générateurs de signaux comprennent des moyens de surveillance (17) pour détecter l'instant où lesdits moyens de traitement centraux (11) ont pris en charge l'instruction d'exécution.

3. Système tel que défini dans la revendication 2, dans lequel lesdits moyens générateurs de signaux comprennent en outre un dispositif formant porte OU (15f) et un dispositif formant bascule bistable (15b).

4. Système tel que défini dans l'une des revendications 1 à 3, dans lequel lesdits moyens générateurs de signaux, lesdits moyens de traitement centraux (11) et lesdits moyens de mémorisation d'état de signal communiquent fonctionnellement par un bus (111) du système.

5. Système tel que défini dans l'une des revendications 1 à 4, dans lequel lesdits moyens de traitement centraux comprennent une puce de microprocesseur Intel i80286.

6. Système tel que défini dans l'une des revendications 1 à 5, dans lequel lesdits moyens de mémorisation d'état de signal comprennent un dispositif formant bascule bistable (15c).

7. Système tel que défini dans l'une des revendications 1 à 6, dans lequel lesdits moyens d'annulation comprennent des premier et second dispositifs formant porte ET (15g, 15i).

8. Système tel que défini dans l'une des revendications 1 à 7, comprenant en outre des moyens de conservation d'état pour indiquer que l'instruction d'exécution a été produite sur la base de la fourniture dudit signal de demande d'interruption non invalidable (NMI) délivré par lesdits moyens de traitement centraux (11) sous l'effet de l'instruction d'exécution, pour que le contenu de ladite instruction spécifique soit émulé conformément aux contenus de l'instruction d'exécution.

9. Procédé pour détecter une instruction d'exécution dans un système en engendrant, à partir de moyens de traitement centraux (11), un signal d'état indicateur du fait qu'une instruction d'exécution spécifique est prise en charge par lesdits moyens de traitement centraux, caractérisé par les étapes consistant à:
    engendrer un signal de demande d'interruption non invalidable (NMI) en réponse audit signal d'état indiquant que lesdits moyens de traitement centraux ont pris en charge l'instruction d'exécution spécifique,
    indiquer si ladite instruction d'exécution spécifique a été ou non réalisée avant le lancement du sous-programme NMI, et
    annuler l'instruction d'exécution spécifique en réponse au fait que l'instruction d'exécution est prise en charge par lesdits moyens de traitement centraux, en renvoyant un signal de terminaison de cycle de bus sur les moyens de traitement centraux, sans exécuter réellement l'instruction d'exécution spécifique,
    dans lequel le procédé détecte l'adresse de l'instruction d'exécution spécifique en se fondant sur la sortie desdits moyens de mémorisation d'état de signal, pour que la fonction suivant le contenu de l'instruction d'exécution spécifique puisse être émulée.

10. Procédé tel que défini dans la revendication 9, comprenant en outre l'étape consistant à indiquer que l'instruction d'exécution a été produite sur la base de la fourniture dudit signal d'interruption non invalidable (NMI) délivré par lesdits moyens de traitement centraux (11) sous l'effet de l'instruction d'exécution, pour que le contenu de ladite instruction spécifique soit émulé conformément aux contenus de l'instruction d'exécution.

*Fig. I*

Fig. 2

EP 0 280 890 B1

# Fig. 3

n1
LINE ℓ30
「L」→「H」?

「H」 → CHECK INSTR. 1 OR 2 BYTE BEFORE INTERR. GEN. POINT. n8

「L」

DECODE INSTR. AT INTERR. GEN. POINT. n2

in/out INSTR. EMULATE n9

n3
in/out INSTR.?

NO → EXECUTE THE INSTRUCTION n10

YES

in/out INSTR. EMULATE n4

ALTER RET. ADDR. TO NEXT ADDR. OF in/out INSTR. n5

CLEAR FLIP/FLOP CKT. n6

NMI. PROC. CONT. COMPLETE. n7

## Fig. 4 PRIOR ART